Europäisches Patentamt

**European Patent Office**

Office européen des brevets

(11) Publication number: **0 110 489**
**A2**

# (12) EUROPEAN PATENT APPLICATION

(21) Application number: **83300469.0**

(22) Date of filing: **28.01.83**

(51) Int. Cl.³: **B 62 B 15/00, A 63 C 17/00**

(30) Priority: **01.12.82 GB 8234227**

(43) Date of publication of application: **13.06.84**
**Bulletin 84/24**

(84) Designated Contracting States: **AT BE CH DE FR IT LI LU NL SE**

(71) Applicant: **ARTFORM MARKETING LIMITED, Bishop Meadow Road, Loughborough Leicestershire LE11 0RE (GB)**

(72) Inventor: **Barker, John Arthur, Thurcaston Grange, Thurcaston Leicester (GB)**

(74) Representative: **Attfield, Donald James et al, BROOKES, MARTIN & WILSON Prudential Buildings 5 St. Philip's Place, Birmingham B3 2AF (GB)**

(54) Roller sledge.

(57) A roller sledge comprising a platform (2) and a downwardly depending U-shaped member (3) extending along the longitudinal axis of the platform. Attached to the bottom (4) of the U-shaped member (3) is a channel section bracket (5) having two downwardly depending arms (8) in which are formed two pairs of coaxial elongated slots (10) having rounded ends and widths greater than the diameter of transverse axles (20) passing through each pair of slots (10) and carrying rollers (21) at either end thereof. Each axle (20) is urged into the bottom of a slot (10) by means of resilient members (11, 12) consisting of coil springs (12) and rubber bushes (11) which act between the axle (21) and the downwardly depending member (3). The rollers (21) are formed from moulded polystyrene (22) and covered with a hard wearing sleeve of polyurethane (23). The ground engaging surface (23) of each roller (21) has a trunkated elliptical shape viewed through an axial section.

TITLE:

"ROLLER SLEDGE"

The present invention relates to an improved form of roller sledge.

In British patent application No. 8119507 filed 24th June, 1981 and published under patent publication No. 2,079, 227A there is described a novel form of roller sledge consisting of a platform having a downwardly depending member extending longitudinally of the platform axis on which are mounted five pairs of stub axles each carrying a freely rotatable roller that is preferably of a part elleptical cross section.

We have now found that the steerability of this sledge is significantly improved if each pair of stub axles is replaced by asingle transverse axle preferably extending substantially to the outward end of each roller and mounted to permit relative movement in a substantially vertical plane between the axle and the platform, the axle moving against a resilient means located between the axle and the said platform.

To provide relative movement between the axle and the platform the axles may be mounted on a bracket which itself may be attached to the said downwardly extending member. The bracket preferably includes two downwardly extending arms in each of which is formed a rectangular slot having rounded ends, of radius not less than the radius of the axle, and having its major axis extending upwardly, preferably at an angle to the vertical, and through which the axle passes. The axle is normally located in the bottom of the slot under the influence of a resilient member acting between the top of the bracket and the axle. Preferably two such resilient members are employed one adjacent each arm of the bracket. The resilient means may conveniently comprise a coil spring and preferably includes a resilient material, e.g. a rubber bush, located between the spring and the axle. The bush is shaped to locate the spring against the axle.

Whilst it is preferred that a bracket be attached to a longitudinally depending member attached to the sledge platform, it is clear that a bracket could be attached directly to the underside of a platform that does not include a downwardly depending member.

In another arrangement the rectangular slots could be provided in the downwardly depending longitudinal member itself in which case, however, a support means positioned transversely of the longitudinal member would need to be provided above the resilient means to provide a suitable reaction surface therefor.

Also, whilst it is preferrred to use a channel cross section bracket, a T-shaped cross section bracket could be used with a single rectangular slot formed in the depending stem.

The most preferred form of the sledge includes front and rear axles only with a total of four rollers. The rollers may be formed from a moulded plastics material such as polystyrene and they may be covered with a sleeve of hard wearing plastics material, e.g. polyurethane.

One embodiment of the invention will now be described with reference to the accompanying drawings in which:-

Figure 1 is a partial cross section of a view through sledge of the present invention,

Figure 2 is a cross sectional representation of figure 1 along the line A-A.

Referring to the drawings, a roller sledge comprises a body generally indicated at 1 having a platform 2 and a downwardly depending channel shaped member 3, the body being formed from an injection moulded polypropylene plastics material. The top of member 3 is closed by a cover 30 that forms part of the platform.

Attached to the lower portion 4 of depending member 3 is a channel section bracket 5 attached to the depending member by four bolts 6 which screw into nuts 7, the bracket being separated from the bottom of the depending member 3 by a strengthening plate 9.

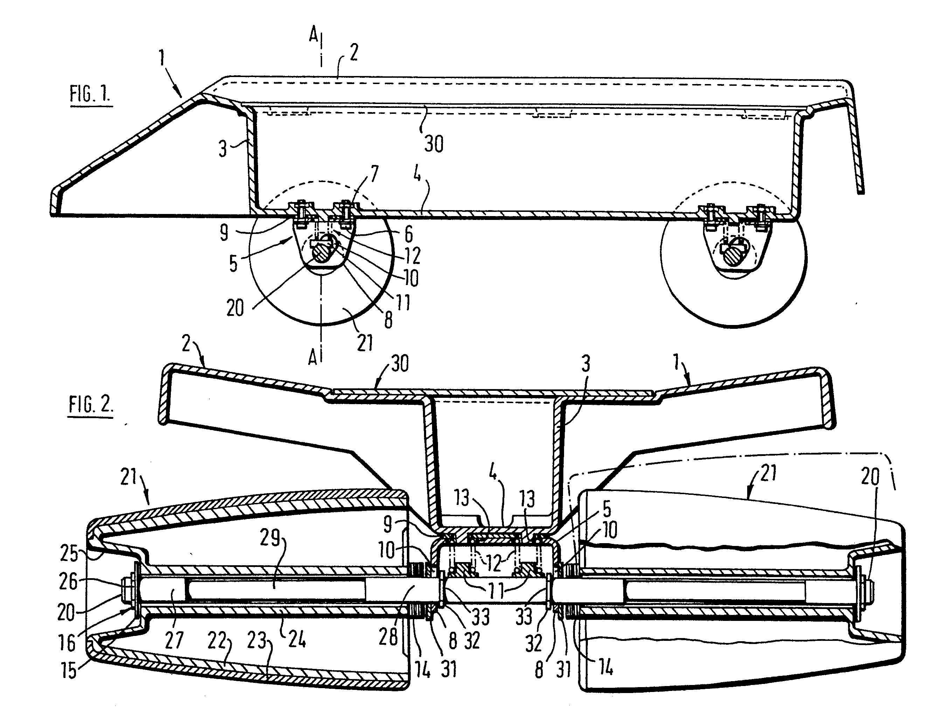

Bracket 5 includes two downwardly extending arms 8. Rectangular slots 10 having radiused end portions are formed in arms 8. The width of the slot is arranged to be substantially the same as the diameter of the axle 20 and its length equal to approximately 1 and $1\frac{2}{5}$ the diameter of the axle, the axle being a sliding fit within the slot and able to move along the major axis thereof between the lower end as shown in figures 1 and 2, and the upper end of the slot. The major axis of the slot is inclined rearwardly at an angle of approximately $30°$ to the vertical.

The axle 20 is retained in the bottom of the slot by the action of a resilient means consisting of a moulded rubber bush 11 and coil spring 12 the upper end of which passes through holes 13 formed in the top of the bracket and locates against pressure plate 9.

Axle 20 extends transversely of the sledge passing through slots 10 in arms 8 of brackets 5 and carries, at each end, a roller 21 having a trunkated elliptical cross section.

-4-

Rollers 21 are formed from injection moulded polystyrene plastics material, forming an inner roller 22, and are covered with a hard wearing polyurethane material moulded onto the inner roller 22. The rollers are mounted to include an axial cylindrical component 24 which is a sliding fit over axle 20 and is freely rotatable thereon, and on end cup re-entrant portion 25. The rollers are maintained in position through the thrust washers 14, washer 31 and circlips 32 which locate in grooves 33 formed in portion 28 of axle 20, located adjacent the bracket 5 and washer 15 and circlip 16, engaging in groove 26 formed in the end of axle 20, located in the cup portion 25 of roller 21, the axle extending just into the said portion.

In use when the rider wishes to steer the sledge say to turn to the right, he transfers his weight onto the right hand side of the platform 2 compressing right hand spring 12 thus causing bracket 5 to move downwardly to the maximum extent of right hand slot 10. At the same time, because the surface 23 of the roller 22 is curved, the portion of roller 22 engaging with the ground is transferred to the right hand side of the roller causing the roller on the opposite end of the axle to take up a position that may be just out of contact with the ground, as shown by the dotted ling in figure 1.

To improve the running of the rollers on axle 20 the centre portion 20a of the axle within each cylindrical member 24 is machined to a narrower diameter so that only portions 27 and 28 provide bushes on which the roller runs.

-1-

CLAIMS:

1.    A roller sledge comprises a platform (2) carried by a plurality of rollers (21) mounted for free rotation about axles (20) extending transversely of the said platform, each axle carrying a roller (21) at either end thereof, characterised in that each axle (20) is mounted to allow relative movement in a substantially vertical plane between the axle and the platform (2), there being substantially vertical resilient, compressible means (11,12) acting between the said axle and the said platform.

2.    A roller sledge according to claim 1 characterised in that the axles (20) are supported by a bracket (5) attached to the said platform (2) or to a portion (3) of the platform integral therewith, the said bracket (5) including an element extending longitudinally of, and parallel, to the platform axis and having a lengthwise portion (8) depending at right angles to the said platform, the said portion thereby being substantially vertical when the said platform is in the horizontal position, a slot (10) having a width greater than the diameter of the axle (20) and through which the said axle extends being formed in the said portion (8) and having its major axis extending substantially upwardly, the axle (20) being urged into the bottom of the said slot (10) by the said resilient means (11,12).

3.    A roller sledge according to claim 2 characterised in that the said slot (10) has rounded ends and has its major axis at an angle of $30^{\circ}$ to the vertical.

4.    A roller sledge according to any one of claims 1 to 3 characterised in that the said bracket is formed by a downwardly depending member (3) integral with said platform and having a U-shaped cross-section.

5. A roller sledge according to any one of claims 1 to 3 characterised in that the said platform (2) includes an integral downwardly depending member (3) having a U-shaped cross section and substantially flat base (4) and the said bracket (5) is attached to the said flat base (4).

6. A roller sledge according to any one of claims 1 to 3 or claim 5 characterised in that the element has a channel shaped cross section and includes two parallel depending arm portions (8) each containing parallel and coaxial slots (10) of equal dimensions and extending at the same angle to the vertical.

7. A roller sledge according to any one of claims 1 to 3 or 5 characterised in that the bracket comprises a T-shaped member having a single downward depending portion.

8. A roller sledge according to any one of the preceding claims characterised in that two resilient means (11,12) are provided to act between each axle (20) and the platform (2) and comprise coil springs (12).

9. A roller sledge according to claim 8 characterised in that each said resilient means (11,12) includes a bush (11) located between the coil spring (12) and the axle (20), the said bush (11) being shaped to locate the spring against the said axle (20) and preferably being formed of a resilient material.

10. A roller sledge according to any one of the preceding claims characterised in that the rollers (21) are formed from a moulded polystyrene (22) covered with a sleeve (23) of hard wearing polyurethane material and have a trunkated elliptical ground engaging surface (23) extending longitudinally of the roller axis.

0110489

FIG. 1.

FIG. 2.